# EUROPÄISCHE PATENTSCHRIFT

(11) **EP 1 348 396 B1**
(45) Veröffentlichungstag und Bekanntmachung des Hinweises auf die Patenterteilung: **07.10.2009**
(21) Anmeldenummer: 03405170.6
(22) Anmeldetag: 12.03.2003
(51) Int. Cl.: A61C 5/12

(54) **Kofferdam und Kofferdambügel**
Dental dam and dental dam arch
Barrage dentaire et arc du barrage dentaire

(30) Priorität: 25.03.2002 CH 20020510
(43) Veröffentlichungstag der Anmeldung: 01.10.2003
(73) Patentinhaber: KerrHawe S.A., 6934 Bioggio (CH)
(72) Erfinder: Kilcher, Beat, 6935 Bosco Luganese (CH); Da Rold, Marco, 6947 Vaglio (CH); Aschmann, Felix, 4052 Basel (CH)
(74) Vertreter: Seehof, Michel

(56) Entgegenhaltungen:
- EP-A- 1 042 992
- US-A- 741 890
- US-A- 1 579 608
- US-A- 1 604 136

## Beschreibung

Die Erfindung bezieht sich auf einen Kofferdam gemäss Oberbegriff von Patentanspruch 1. Ein Kofferdam ist ein Hilfsmittel bei zahnärztlichen Behandlungen, um die zu behandelnden Zähne von der restlichen Mundhöhle zu isolieren. Dadurch kann das Arbeitsfeld trocken und relativ keimfrei gehalten werden, während der Patient vom Schlucken oder Ansaugen von Kühlwasser, Bohrstaub und auch gegebenenfalls von Instrumenten geschützt werden kann. Zu diesem Zwecke wird schon seit über 100 Jahren in einem Gummituch ein Loch angebracht und dieses über den Zahn gezogen, der behandelt werden soll, so dass der Rand des Loches im Gummituch am harten Zahn anliegt und das Gummituch die Mundschleimhaut abdeckt, während der obere Teil des Zahnes behandelbar ist.

Die Schwierigkeit bei der Anwendung dieser Technik ist, den richtigen Abstand zwischen den Löchern zu wählen, auch bei Verwendung von Schablonen, da dieser Abstand von Patient zu Patient je nach Gebissgrösse, Fehlstellungen der Zähne und je nach verwendeter Dicke des Kofferdams variiert.

Insbesondere besteht die Gefahr, dass der Abstand zu klein gewählt wird und der zwischen den Zähnen verbleibende Gummi zu kurz ist, um sich an beiden Zähnen anzulegen und das Zahnfleisch im Zahnzwischenraum (Papille) zuzudecken. In der Folge rutscht der interdentale Anteil des Gummis auf eine Seite der Papille und die Abdichtung ist nicht mehr gewährleistet.

Dies gilt auch für die US-A-1 604 136, die einen Kofferdam mit relativ dicht angeordneten Protuberanzen offenbart, der der Zahnarzt über die Zähne legt und die entsprechende Protuberanze mit dem Zahn perforiert, wodurch eine ausgefranste Öffnung resultiert.

Ausserdem besteht beim Einschneiden eines Loches für den Zahn oder mehrerer Löcher die Gefahr, dass diese Löcher nicht sauber geschnitten sind und ausgefranst sind, wodurch eine erhebliche Einreissgefahr besteht.

Es ist von diesem Stand der Technik ausgehend Aufgabe der vorliegenden Erfindung, den Kofferdam derart zu verbessern, dass die Gefahr seines Verrutschens beseitigt und die Gefahr des Einreissens stark vermindert wird und auch bei ausgeprägteren Fehlständen die optimale Abdichtung gewährleistet ist. Diese Aufgabe wird mit dem Kofferdam gemäss Patentanspruch 1 gelöst.

Eine weitere Aufgabe ist es, dem Patienten den grösstmöglichen Komfort zu bieten. Diese Aufgabe wird mit dem Kofferdam gemäss Patentanspruch 6 gelöst. Verschiedene Ausführungsformen und Verbesserungen sind in den abhängigen Ansprüchen definiert.

Die Erfindung wir im Folgenden anhand von Zeichnungen von Ausführungsbeispielen näher erläutert.
- Fig. 1: zeigt zwei freigelegte Zähne mit von einem Kofferdam zugedeckter Papille,
- Fig. 2: zeigt schematisch einen Kofferdam, in dem Erhebungen für den ganzen Kiefer angeordnet sind,
- Fig. 3: zeigt schematisch einen Kofferdam, in dem Erhebungen für einen rechten Quadranten angeordnet sind,
- Fig. 4: zeigt schematisch einen Kofferdam, in dem Erhebungen für den rechten Sextanten des Kiefers angeordnet sind,
- Fig. 5: zeigt aufgeschnittene Erhebungen in einem anderen Kofferdam,
- Fig. 6: zeigt eine Ausführungsvariante zu Fig. 5 mit Vertiefungen anstatt Erhebungen,
- Fig. 7: zeigt schematisch ein Ausführungsbeispiel eines erfindungsgemässen Kofferdams in Seitenansicht,
- Fig. 8: zeigt den Kofferdam von Fig. 7 von oben,
- Fig. 9: zeigt den Kofferdam von Fig. 7 im Schnitt,
- Fig. 10: zeigt den Kofferdam von Fig. 7 in perspektivischer Sicht,
- Figg. 11A- 11C: zeigen ein erstes Ausführungsbeispiel eines Kofferdambügels in drei Ansichten,
- Figg. 12A- 12C: zeigen ein zweites Ausführungsbeispiel eines Kofferdambügels in drei Ansichten, und
- Fig. 13: zeigt in einer Sicht von Unten einen auf einen Bügel gemäss Figur 11 aufgespannten Kofferdam gemäss Figur 7.

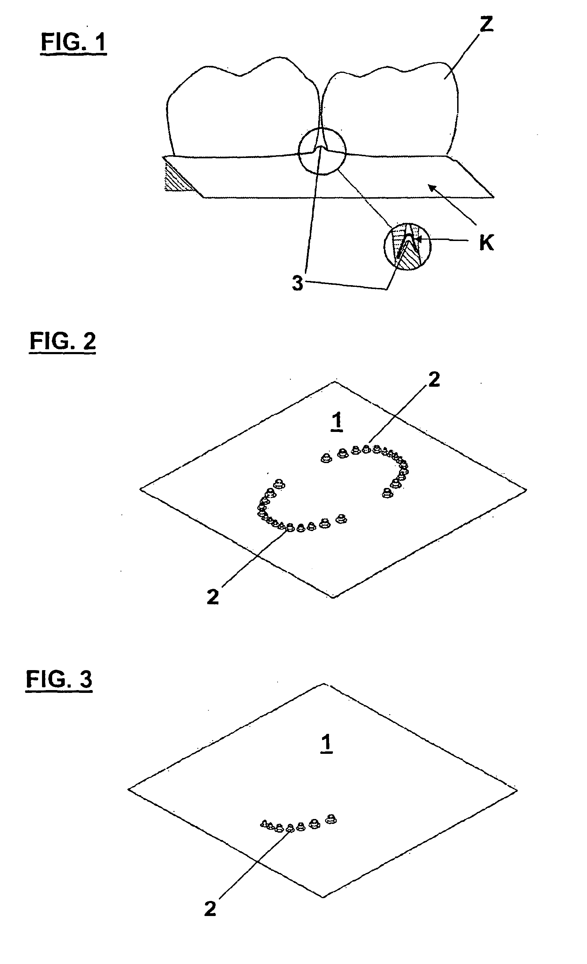

In Fig. 1 ist ein angelegter Kofferdam K gezeigt, der um und zwischen zwei Zähnen Z gelegt ist und die Papille 3 abdeckt. Der Kofferdam wird wie üblich mittels Klammern in der Mundhöhle befestigt.

Fig. 2 zeigt beispielhaft eine Konfiguration von Erhebungen für beide Kiefer, wobei der Kofferdam 1 nur schematisch als Rechtecktuch, beispielsweise ein Gummituch, eingezeichnet ist und für die Zähne des ganzen Kiefers Erhebungen 2 vorgesehen sind.

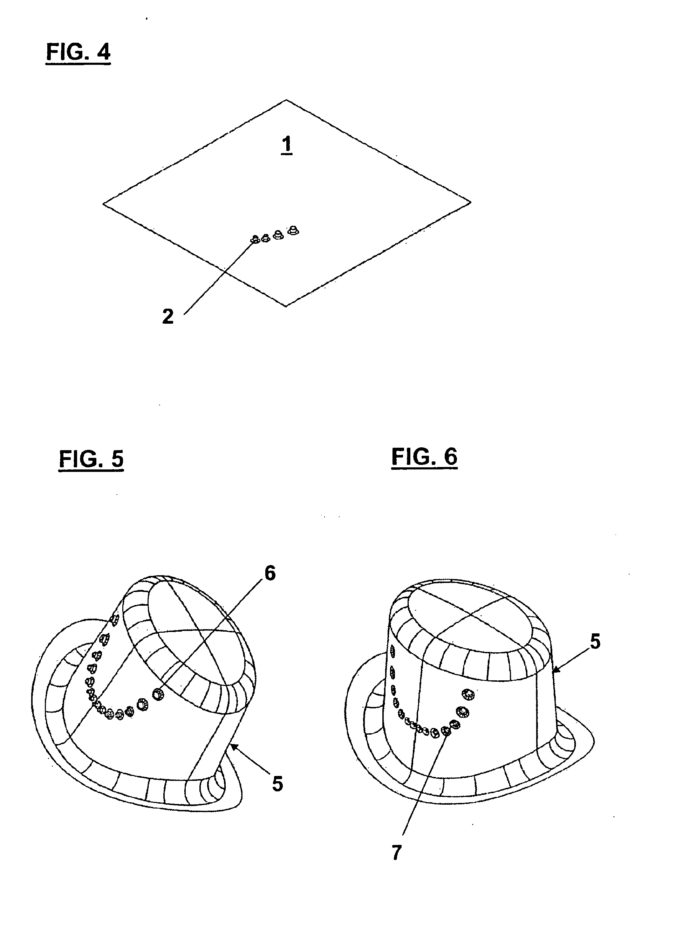

In den Figg. 3 und 4 sind Erhebungen nur für den rechten Quadranten oder für den linken Sextanten des Kiefers vorgesehen, wobei die Erhebungen auch für den linken Quadranten oder Sextanten oder für den mittleren Sextanten vorgesehen sein können, oder auch nur für einzelne Zähne.

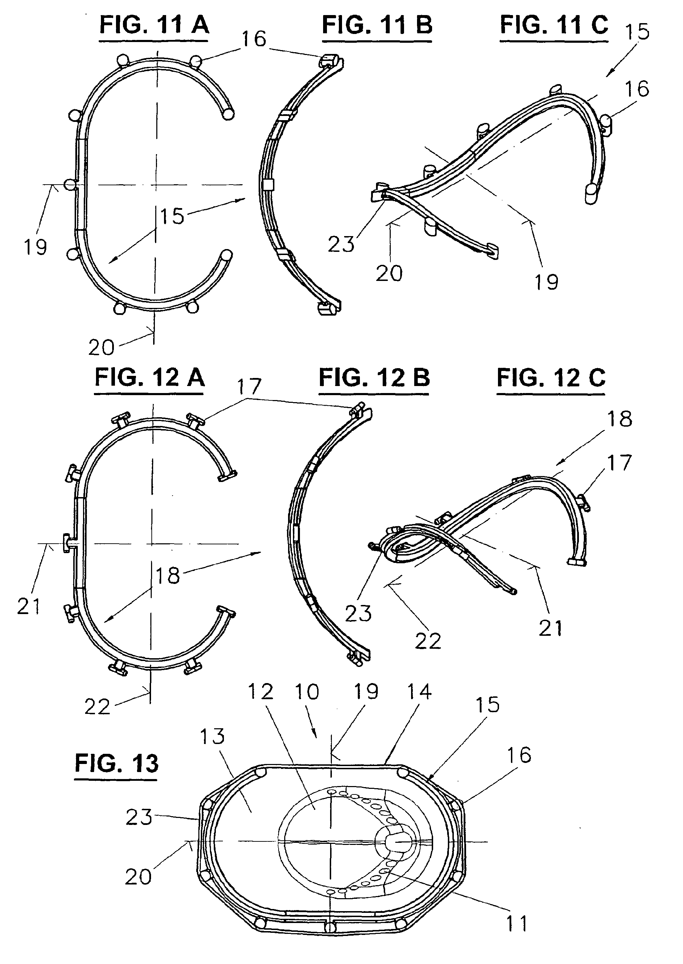

Die erfindungsgemässen Erhebungen in einem Kofferdam können an sämtlichen Arten von Kofferdam angebracht werden, d.h. an einem flachen, tuchähnlichen Kofferdam gemäss den Figuren 1-4 und gemäss den Figg. 5 bis 10 an einem Kofferdam, der eine Vertiefung aufweist, z.B. gemäss US-A-174 942 oder dazu eine Befestigungseinrichtung aufweist, um die Vertiefung oder den Beutel in der Mundhöhle und auch ausserhalb zu befestigen, siehe beispielsweise WO 98/34559, oder unter Verwendung von Kofferdambügeln gemäss den Figuren 11 und 12.

Bei den 3-dimensionalen Kofferdam-Beuteln können die Erhebungen auch einwärts gerichtet sein, d.h. als Vertiefungen ausgebildet sein. Auch können die Erhebungen in verschiedenen Konfigurationen, z.B. für beide Kiefer, für einen Kiefer, ganzen Quadranten oder Sextanten oder auch nur für einzelne Zähne vorgesehen sein.

In Fig. 5 ist eine Konfiguration für den ganzen Kiefer vorgesehen, wobei der Kofferdam einen 3-dimensionalen Beutel aufweist, der weiter oben beschrieben und in den genannten Veröffentlichungen ausführlich offenbart und dargestellt ist. In Fig. 5 erkennt man ferner, dass die Erhebungen 6 auf dem Kofferdambeutel 5 teilweise abgeschnitten sind, um sie auf die Zähne aufzustecken.

Dabei kann der Durchmesser der Löcher 6 den Zähnen angepasst werden, wobei im allgemeinen ein Durchmesser genommen wird, der etwa einem Viertel des Durchmessers der abzudeckenden Zähne entspricht, um eine maximale Haftung der Ränder der Erhebungen und des Kofferdam am Zahn zu gewährleisten, damit die Papille und Mundhöhle maximal abgedeckt sind und eine gute Isolation erreicht wird. Dann liegt der Kofferdam mit Spannung flächig am Zahnumfang an, wobei der am Zahn anliegende Teil in den Sulcus (Zahnfleischtasche) gelegt wird, damit der Zahn maximal exponiert und der Kofferdam besser gegen Verrutschen gesichert wird.

Sinngemäss gilt dies auch für die Vertiefungen 7 gemäss Fig. 6.

Ausgehend von den gezeigten und beschriebenen Beispielen kann auch die herkömmliche Lochtechnik verwendet werden, falls in besonderen Situationen Erhebungen nicht an den gewünschten Stellen vorhanden sind, so dass auch für diese Situation der Kofferdam verwendet werden kann.

Neben den beschriebenen Beispielen eines Kofferdams, dem einfachen rechteckigen Tuch und dem beutelartigen Kofferdam mit Befestigungseinrichtung gibt es eine Vielzahl von verschiedenen Ausführungen eines Kofferdams, die Erhebungen oder Vertiefungen in einer grossen Anzahl von Variationen aufweisen können.

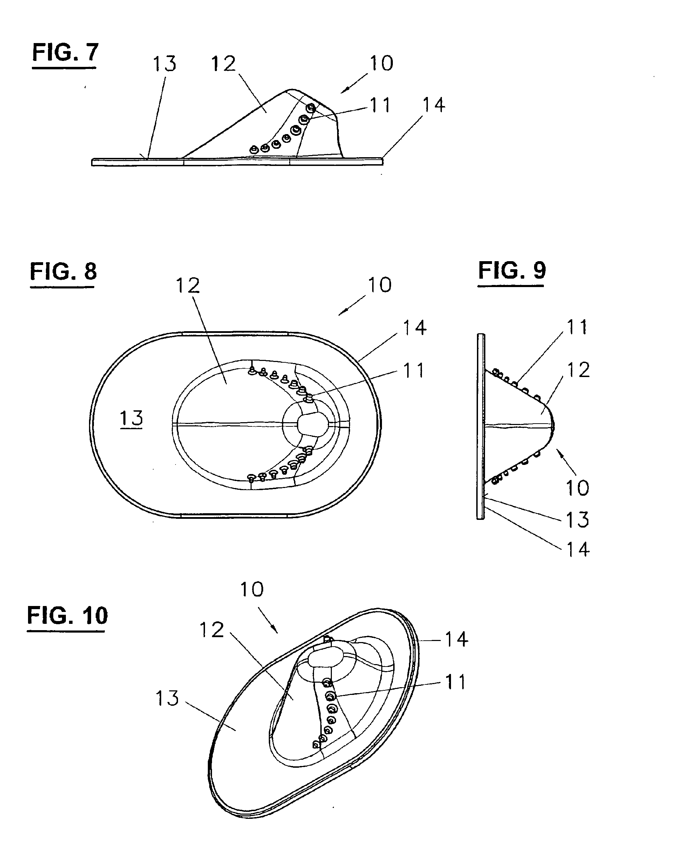

Die Figuren 7 bis 10 zeigen schematisch ein erprobtes Ausführungsbeispiel eines Kofferdams, der einerseits einen festen Sitz und gute Abdichtung und andererseits einen guten Komfort für den Patienten bietet.

In Verbesserung zu den vorhergehenden Beispielen wurden die Erhebungen 11 am Kofferdam 10 anatomisch angeordnet, d.h. dass sie eine dem Verlauf der Zähne angepasste Anordnung aufweisen. Dies gilt auch für den Beutel 12 des Kofferdams, der nicht symmetrisch bezüglich des im wesentlichen ebenen Randes 13 angeordnet und geformt ist, sondern exzentrisch und schräg. Die gezeigte Orientierung und Grösse sowie Form des Beutels resultiert in eine weitgehendst spannungsfreie Anpassung des Beutels im Rachen, so dass der Zahnarzt unter optimalen Bedingungen arbeiten kann und der Patient vom Beutel nicht gestört wird. Ausserdem erlaubt diese Formgebung und Anordnung die Verwendung von relativ weichen Klammern.

Ein drittes Element, das zur Verbesserung des Kofferdams beiträgt, ist der umlaufende Wulst 14. Dieser dient einerseits der Aufnahme eines Kofferdambügels und wirkt andererseits als Polster und als Abgrenzung im Bereich, in dem der Bügel nicht wirkt. Somit entfällt das Zuschneiden von herausragendem Kofferdam, der für Patienten lästig ist.

In den Figuren 11 und 12 sind zwei Varianten eines Kofferdambügels gezeichnet. Der C-förmige Bügel 15 von Fig. 11 ist bezüglich zwei Ebenen gewölbt. Die ersten Wölbungen bezüglich der Mittellinie 19 sind in Figur 11A ersichtlich und die zweiten Wölbungen bezüglich der zweiten Mittellinie 20 sind in Figur 11C ersichtlich, so dass der Bügel in jeweils zwei Hälften zerfällt, wovon jede Hälfte in zwei Ebenen gewölbt ist.

Damit wird erreicht, dass sich der Kofferdambügel besser an die faciale Anatomie anpassen kann, ohne zu hohe Spannungen auf die Lippen zu erzeugen. Damit kann der Speichelzieher problemlos eingeführt werden und es ist darüber hinaus noch genügend Öffnung vorhanden, damit der Patient mühelos atmen kann.

Der Bügel 15 weist an seinem äusseren Rand voneinander beabstandete Halteelemente 16 auf, die dazu dienen, den darübergezogenen Kofferdam festzuhalten, siehe Figur 13. Die Halteelemente können wie in Figur 11 eine knopfartige Form 16 aufweisen oder die Halteelemente 17 an Kofferdambügel 18 können eine T-artige Form aufweisen, doch sind weitere Formen ohne weiteres möglich. Die Halteelemente sind so ausgestaltet, dass der Kofferdam mit einer geringen Spannung am festgelegten Ort bleibt und sich nicht mehr verschiebt.

Der Kofferdambügel 18 mit Halteelemente 17 gemäss Figur 12 ist ebenfalls bezüglich den Mittellinien 21, 22 in zwei Ebenen gewölbt Statt C-förmig können die Bügel auch U-förmig ausgestaltet sein. Ausserdem können die Bügel auch eben sein, oder nur in einer Ebene gewölbt.

In Figur 13 ist der Kofferdam gemäss Figur 7 auf den Bügel gemäss Figur 11 aufgespannt. In dieser Sicht von Unten, d.h. in den Beutel hinein und in Richtung Rachen, sind die Erhebungen nur andeutungsweise erkennbar. Es ist auch ersichtlich, dass der Rand des Bügels aussen eine umlaufende Nut 23 aufweist, in die der Wulst 14 des Kofferdams teilweise eingelegt ist, wodurch eine stabile Lage erreicht wird. Ein derart aufgespannter Kofferdam kann mit Klammern oder dergl. so im Mund des Patienten befestigt werden, dass dieser auch nach einer langen Zeit nicht darunter leidet und eine gute Abdichtung auch über eine längere Zeit erzielt wird.

## Patentansprüche

1. Kofferdam, enthaltend eine Abdeckfolie mit Erhebungen und Vertiefungen an Stellen, an denen ein Zahn oder mehrere Zähne bearbeitet werden sollen und die vorgesehen sind, mit einer Öffnung versehen zu werden, **dadurch gekennzeichnet, dass** die Erhebungen (2, 6; 11) oder Vertiefungen (7) anatomisch gemäss der idealen Anordnung der Zähne angeordnet und derart ausgebildet sind, dass sie in einem Abstand vom Boden abschneidbar sind derart, dass sich der Hals der Erhebung um den Zahn legen kann und der Kofferdam beutelartig (5, 12) ausgestaltet ist und einen um den Beutel umlaufenden Rand (13) aufweist, wobei der Beutel bezüglich der Randebene asymmetrisch und nicht senkrecht angeordnet ist.

2. Kofferdam nach Anspruch 1, **dadurch gekennzeichnet, dass** die Erhebungen (2, 6, 11) oder Vertiefungen (7) für eine bestimmte Anzahl von Zähnen vorgesehen sind.

3. Kofferdam nach Anspruch 2, **dadurch gekennzeichnet, dass** Erhebungen (2) für Zähne des ganzen Kiefers vorgesehen sind.

4. Kofferdam nach einem der Ansprüche 1 bis 3, **dadurch gekennzeichnet, dass** der Kofferdam einen umlaufenden Wulst (14) aufweist.

5. Kofferdam nach einem der Ansprüche 1 bis 4, mit einem Kofferdambügel zu seiner Befestigung, **dadurch gekennzeichnet, dass** der Kofferdambügel C- oder U-förmig ausgebildet ist und in zwei Ebenen, bezüglich zwei Mittellinien (19, 20; 21, 22), gewölbt ist.

6. Kofferdam nach Anspruch 5, **dadurch gekennzeichnet, dass** der Kollerdambügel an seinem äusseren Rand Halteelemente (16; 17) aufweist.

7. Kofferdam nach Anspruch 6, **dadurch gekennzeichnet, dass** die Halteelemente (16; 17) scharfkantig sind,

8. Kofferdam nach einem der Ansprüche 5 bis 7, **dadurch gekennzeichnet, dass** der Rand des Kofferdambügels aussen eine umlaufende Nut (23) aufweist.

## Claims

1. Rubber dam comprising a covering foil having projections and depressions at the locations where a tooth or a plurality of teeth are to be worked on and which are intended to be provided with an opening, **characterised in that** the projections (2, 6; 11) or depressions (7) are arranged anatomically according to the ideal disposition of the teeth and designed to be cut off at a distance from the bottom such that the neck of the projection may come to lie around the tooth, and that the rubber dam is designed in a bag-like manner (5, 12) and has a rim (13) that surrounds the bag, the bag being arranged asymmetrically and non-perpendicularly with respect to the rim plane.

2. Rubber dam according to claim 1, **characterised in that** the projections (2, 6; 11) or depressions (7) are provided for a determined number of teeth.

3. Rubber dam according to claim 2, **characterised in that** projections (2) for the teeth of the entire jaw are provided.

4. Rubber dam according to any one of claims 1 to 3, **characterised in that** the rubber dam has a surrounding bead (14).

5. Rubber dam according to any one of claims 1 to 4, including a rubber dam frame for its attachment, **characterised in that** the rubber dam frame has a C- or U-shaped design and is curved in two planes relative to two centre lines (19, 20; 21, 22).

6. Rubber dam according to claim 5, **characterised in that** the rubber dam frame is provided with retaining elements (16; 17) on its outer rim.

7. Rubber dam according to claim 6, **characterised in that** the retaining elements (16; 17) are sharp-edged.

8. Rubber dam according to any one of claims 5 to 7, **characterised in that** the rim of the rubber dam frame has a surrounding groove (23) on the outside.

## Revendications

1. Digue comprenant une feuille de couverture présentant des saillies et des dépressions aux endroits où une dent ou une pluralité de dents sont à traiter et qui sont destinés à être pourvus d'une ouverture, **caractérisée en ce que** les saillies (2, 6; 11) ou dépressions (7) sont agencés de manière anatomique conformément à la disposition idéale des dents et adaptés à être coupés à une distance du fond de telle sorte que le cou de la saillie puisse se poser sur la dent, et que la digue est réalisée de manière similaire à une poche (5, 12) et présente un bord (13) qui entoure la poche, la poche étant agencée de manière asymétrique et non perpendiculaire par rapport au plan du bord.

2. Digue selon la revendication 1, **caractérisée en ce que** les saillies (2, 6; 11) ou dépressions (7) sont prévus pour un nombre déterminé de dents.

3. Digue selon la revendication 2, **caractérisée en ce que** des saillies (2) pour les dents de l'ensemble du maxillaire sont prévues.

4. Digue selon l'une quelconque des revendications 1 à 3, **caractérisée en ce que** la digue présente un bourrelet (14) périphérique.

5. Digue selon l'une quelconque des revendications 1 à 4, comprenant un cadre de digue pour sa fixation, **caractérisée en ce que** le cadre de la digue est réalisé en forme de C ou de U et est bombé dans deux plans par rapport à deux lignes médianes (19, 20; 21, 22).

6. Digue selon la revendication 5, **caractérisée en ce que** le cadre de la digue présente des éléments de retenue (16; 17) à son bord extérieur.

7. Digue selon la revendication 6, **caractérisée en ce que** les éléments de retenue (16; 17) ont des arêtes vives.

8. Digue selon l'une quelconque des revendications 5 à 7, **caractérisée en ce que** le bord du cadre de la digue présente à l'extérieur une rainure périphérique (23).
